## Europäisches Patentamt

## European Patent Office

## Office européen des brevets

(19)

(11) Veröffentlichungsnummer: **0 139 226**
**B1**

(12) # EUROPÄISCHE PATENTSCHRIFT

(45) Veröffentlichungstag der Patentschrift:
02.09.87

(21) Anmeldenummer: 84111128.9

(22) Anmeldetag: 18.09.84

(51) Int. Cl.⁴: **H 02 M 3/335**

(54) **Sperrwandler-Schaltnetzteil.**

(30) Priorität: 06.10.83 DE 3336422

(43) Veröffentlichungstag der Anmeldung:
02.05.85 Patentblatt 85/18

(45) Bekanntmachung des Hinweises auf die Patenterteilung:
02.09.87 Patentblatt 87/36

(84) Benannte Vertragsstaaten:
**CH DE FR GB IT LI NL SE**

(56) Entgegenhaltungen:
**WO-A-81/01224**
**DE-A-2 819 225**
**US-A-3 840 797**

(73) Patentinhaber: **Siemens Aktiengesellschaft Berlin und München, Wittelsbacherplatz 2, D-8000 München 2 (DE)**

(72) Erfinder: **Paulik, Ernst, Rosenstrasse 12, D-8893 Hilgertshausen (DE)**
Erfinder: **Peruth, Günther, Dipl.- Ing.(FH), Franz- Wolter- Strasse 13, D-8000 München 81 (DE)**

EP 0 139 226 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung bezieht sich auf einen Sperrwandler-Schaltnetzteil zur Versorgung eines elektrischen Geräts, gemäß Oberbegriff des Patentanspruches 1.

Sperrwandler-Schaltnetzteile sing z. B. in "Funkschau (1975) H. 5, S. 40-44", in der EP-A-0 046 515 ( = DE-A-30 32 034) oder in der nach Artikel 54(3) EPÜ zum Stand der Technik gehörenden Patentanmeldung EP-A- 0 135 119 beschrieben.

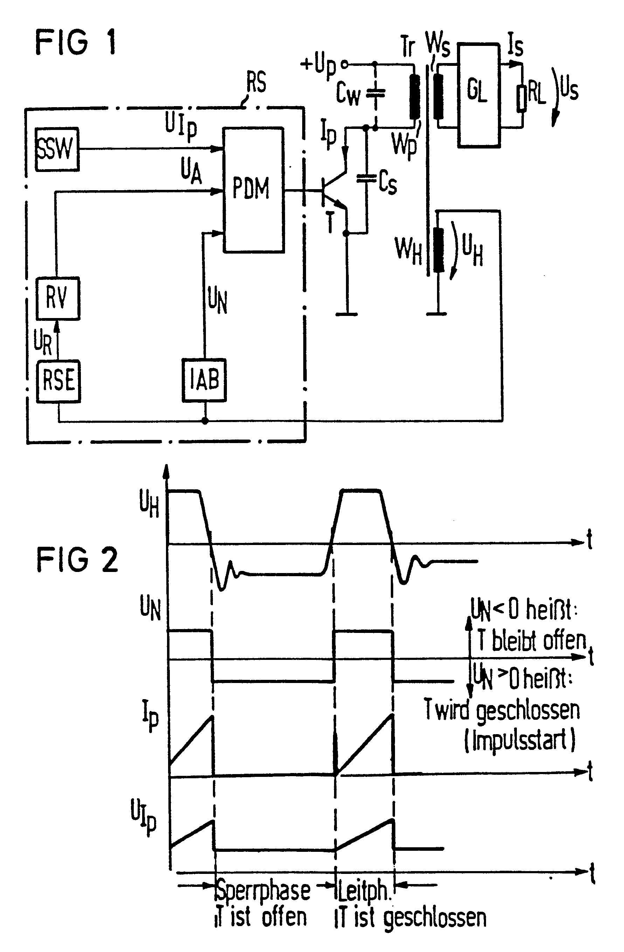

Bekanntlich hat ein solcher Schaltnetzteil die Aufgabe, ein elektronisches Gerät, z. B. einen Fernsehempfänger, mit stabilisierten und geregelten Betriebsspannungen zu versorgen. Der Kern eines solchen Schaltnetzteils ist deshalb durch eine Regelschaltung gegeben, deren Stellglied durch den genannten Schalttransistor, insbesondere durch einen bipolaren Leistungstransistor, realisiert ist. Das zu einem solchen Schaltnetzteil gehörende Prinzipschaltbild ist in Fig. 1 dargestellt. Auf dieses soll zunächst eingegangen werden.

Ein npn-Leistungstransistor T dient hier als Stellglied für die Regelschaltung RS und ist mit seiner Emitter-Kollektorstrecke in Serie mit der Primärwicklung $W_p$ eines Transformators Tr geschaltet. Dabei kann unter Bezugnahme auf Fig. 1 der EP-A-0 046 515 festgestellt werden, daß die diese Serienschaltung betreibenden Gleichspannung durch Gleichrichtung der vom Wechselstromnetz gelieferten Wechselspannung mittels einer Gleichrichterschaltung, z. B. einer Grätzschaltung, erhalten wird. Im Falle der Verwendung eines npn-Transistors T liegt der Emitter dieses Transistors am Bezugspotential (Masse), der Kollektor an der Primärwicklung $W_p$ des Transformators Tr und das andere Ende dieser Primärwicklung an dem von der genannten (aber in den Zeichnungen nicht dargestellten) Gleichrichterschaltung gelieferten Versorgungspotentiai $+U_p$. Die Emitter-Kollektorstrecke des Transistors T ist von einem Kondensator $C_s$ überbrückt, während die an der Primärwicklung $W_p$ angedeutete Kapazität $C_w$ parasitärer Natur ist. Der Leistungstransistor T ist an seiner Basis durch den Ausgangsteil der Regelschaltung RS gesteuert, der bevorzugt durch einen Pulsdauer-Modulator PDM gegeben ist.

Eine Hilfswicklung $W_H$ des Transformators Tr, die in dem gezeichneten Beispielsfall als Sekundärwicklung ausgestaltet ist, dient als Sensor für die Regelschaltung RS und liegt daher mit dem einen Ende an dem besagten Bezugspotential und mit dem anderen Ende am Eingang der Regelschaltung RS. Eine weitere Sekundärwicklung $W_s$ dient der Beaufschlagung des zu versorgenden elektrischen Geräts $R_L$ unter Vermittlung einer Gleichrichteranlage GL, die an das Gerät die Gleichspannung $U_s$ weitergibt.

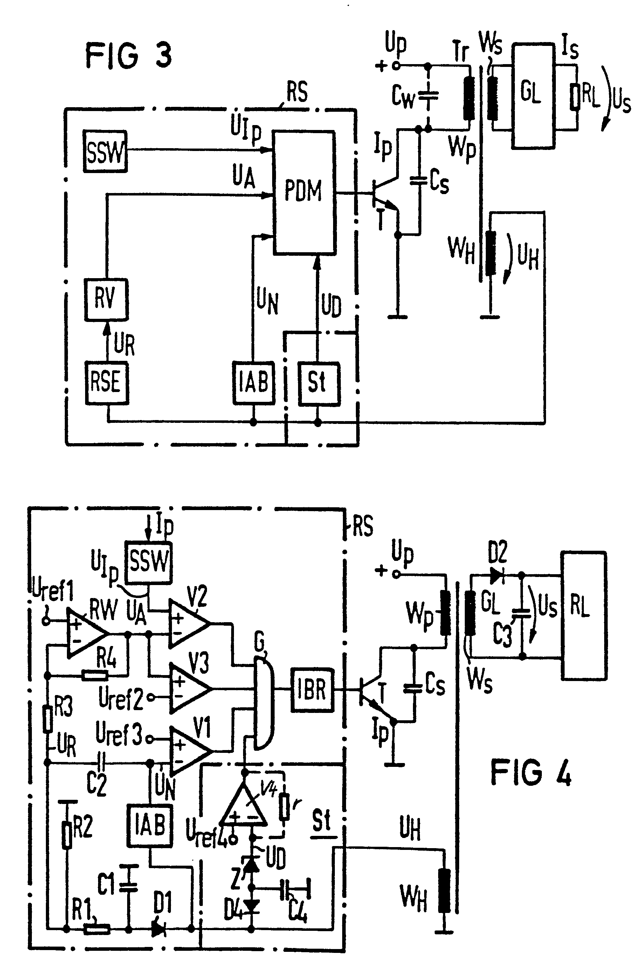

Die Regelspannung RS besteht bei den in den Zeichnungen dargestellten Beispielen aus dem den Transistor T steuernden und als Pulsdauer- Modulator ausgebildeten Ausgangsschaltungsteil PDM und zwei durch die Hilfswicklung $W_H$ gesteuerten Eingangsteilen, wobei der eine Eingangsteil RSE der Regelspannungserzeugung dient und über einen Regelverstärker RV ein Steuersignal $U_A$ für den Ausgangsteil PDM abgibt. Der andere Eingangsteil IAB dient der Impulsaufbereitung und liefert ein Signal $U_N$ an den Ausgangsteil PDM der Regelschaltung RS. Schließlich ist noch ein Strom-Spannungswandler SSW vorgesehen, der die Istwertsteuerung der Regelschaltung RS bildet und eine dem Primärstrom $I_p$ proportionale Spannung $U_{Ip}$ an den Pulsdauer-Modulator PDM abgibt. Die zuletzt genannten Teile der Regelschaltung RS sind ebenfalls in der EP-A-0 046 515 angegeben. Sie gehören zu der dort in Fig. 3 dargestellten Regelschaltung. Die Regelspannungserzeugung ist durch die dort aus Fig. 1 und 2 ersichtlichen Widerstände R5 und R4 gegeben. Die Impulsaufbereitung IAB besteht aus der in Fig. 3 der EP-A-0 046 515 ersichtlichen Nulldurchgangsidentifikation und der durch sie beaufschlagten Steuerlogik. Der Pulsdauer-Modulator PDM ist schließlich durch die in der EP-A-0 046 515 angedeutete Triggerschaltung mit dem durch sie beaufschlagten Teil der Steuerlogik gegeben.

Das zu einer Schaltung gemäß Fig. 1 der vorliegenden Anmeldung gehörende Zeitdiagramm, also das zeitliche Verhalten der in der Regelschaltung RS auftretenden Signals $U_H$ ( = das von der Transformatorwicklung $W_H$ zur Steuerung der Regelschaltung abgegebene Signal), $U_N$ ( = das von der Impulsaufbereitung IAB gelieferte Signal), $I_p$ ( = der von der mit dem Schalttransistor T in Serie liegenden Transformatorwicklung $W_p$ gelieferte Strom) und $U_{Ip}$ ( = das vom Strom-Spannungswandler SSW gelieferte Istwertsignal) ist in Figur 2 dargestellt.

Ersichtlich liefert die von der Transformatorwicklung $W_H$ gelieferte Spannung $U_H$ mit dem Nulldurchgang ($U_H$ = 0 V) die Information, daß die im Transformator Tr gespeicherte Energie abgeflossen ist und ein neuer Ladezyklus beginnen, d.h. der durch den Transistor T gegebene Schalter geschlossen werden kann. Über die Impulsaufbereitungsstufe IAB wird diese Information dem Pulsdauer-Modulator PDM mitgeteilt. Es gilt dabei: $U_N > 0$ V → Impulsstart, $U_N < 0$ V → kein Impulsstart möglich.)

Weiterhin gewinnt man aus der von der Wicklung $W_H$ des Transformators Tr gelieferten Signalspannung $U_H$ mit Hilfe des Regelspannungserzeugers RSE eine zur Sekundärspannung $U_s$ proportionale Regelspannung $U_R$. Im Regelverstärker RV wird die Regelspannung mit einer Referenz verglichen. Die Differenz zwischen der Regelspannung $U_R$ und der Referenz wird vom Regelverstärker RV verstärkt und die von dessen Ausgang gelieferte Signalspannung $U_A$ dem Pulsdauer-Modulator PDM mitgeteilt, der sie mit dem Signal $U_{Ip}$ des Strom-Spannungswandlers SSW vergleicht und den durch den Transistor T gegebenen Schalter öffnet, sobald $U_{lp} = U_A$ gilt. Auf diese Weise wird der Spitzenwert $I_{pmax}$ von $I_p$ solange korrigiert, bis die Differenz zwischen $U_R$ und der Referenzspannung verschwindet. Dies bedeutet, daß $U_R$ und damit $U_s$ konstant bleiben.

Bei Sperrwandler-Schaltnetzteilen der soeben beschriebenen Art, aber auch allgemein bei solchen der eingangs definierten Art hat man nun die Erfahrung gemacht, daß sie bei gewissen Störfällen auf der Primärseite des Transformators Tr dazu neigen, zu einer starken Überhöhung der Sekundärspannungen zu führen, was ggf. zu Zerstörungen in der vom Schaltnetzteil beaufschlagten Folgeschaltung führen kann. Solche Störfälle können z. B. durch Defekte an den den Schaltnetzteil bildenden Bauteilen, durch Überschreitung von Toleranzen, durch Kontaktunterbrechungen usw. bedingt sein.

Es ist Aufgabe der vorliegenden Erfindung, hier eine geeignete Abhilfe zur Verfügung zu stellen.

Dies wird durch kennzeichendnen Merkmale des Anspruches 1 erzielt.

Dabei ist es weitere Aufgabe der Erfindung, eine kostengünstige Schaltung anzugeben, die sich vor allem auch für die Ausgestaltung der in der genannten EP-A-0 046 515 bzw. in der Patentanmeldung EP-A-0 135 119 beschriebenen Sperrwandler-Schaltnetzteile eignet.

Im Interesse der Störungsfreiheit des das zu beaufschlagende elektrische Gerät enthaltenden Sekundärkreises ist es außerdem wichtig, wenn zur Beaufschlagung der Störschutzschaltung nicht die diesem zugeteilte Sekundärwicklung, sondern die gemäß der Ausgestaltung nach Fig. 1 für die Beaufschlagung der Regelschaltung vorgesehene Sekundärwicklung oder ggf. eine weitere Sekundärwicklung vorgesehen ist. Weiter ist es vorteilhaft, wenn die Schutzschaltung so ausgestaltet ist, daß sie an der Steuerung des Ausgangs des für die Beaufschlagung der Steuerelektrode des Schalttransistors T vorgesehenen Regelkreises RS beteiligt ist.

Vor der Beschreibung der Erfindung anhand der Fig. 3 und 4 wird noch auffolgende Eigenschaften des in Fig. 1 dargestellten Regelkreises RS aufmerksam gemacht. Wird nämlich bei dieser Ausgestaltung innerhalb der Impulsablaufsteuerung IAB oder im Regelspannungserzeuger RSE oder im Regelverstärker RV durch eine Störung (Bauteile-Veränderung, Unterbrechung oder Kurzschluß) eingegriffen, so ist mit einem Ansteigen der Sekundärspannung $U_s$ zu rechnen, was zur Zerstörung der von der Sekundärwicklung $W_s$ beaufschlagten Schaltungsteile GL bzw. RL führen kann.

Die VDE-Gerätebedingungen beinhalten aber, daß beim Auftreten einer Störung auf der mit dem Netz verbundenen Seite des Schaltnetzteils kein Spannungsanstieg auf der mit dem Netz nicht verbundenen Seite auftreten darf. Besonders kritisch ist dies bei einem Betriebszustand (Bereitschafts- oder Standby-Betrieb), der gegenüber der normalen Last $R_L$ nur mit Minimallast ($R_L$ = groß) arbeitet. Um hier eine Abhilfe zu schaffen ist es üblich, einen Spannungsbegrenzer auf der das zu beaufschlagende Gerät enthaltenden Sekundärseite vorzusehen.

Bei der vorliegenden Erfindung ist es hingegen angestrebt, nur dann in das Regelsystem einzugreifen und den Schalter T zu sperren, wenn die Spannung $U_s$ über einen festzulegenden Betrag ansteigt.

Wie nun aus Fig. 3 ersichtlich, ist gemäß der weiteren Erfindung der Pulsdauermodulator PDM mit einem weiteren Eingang versehen, der durch eine von der Störungsschutzschaltung St gelieferte Spannung $U_D$ beaufschlagt wird. Außerdem ist zur Beaufschlagung der Störungsschutzschaltung St, wie bereits angedeutet, dieselbe Sekundäwicklung $W_H$ zuständig, die auch zur Beaufschlagung des Regelkreises RS dient.

Eine besonders vorteilhafte Ausgestaltung ist in Fig. 4 gezeigt.

Bei dieser Ausgestaltung ist der von der Hilfsekundärwicklung $W_H$ beaufschlagte Regelspannungserzeuger RSE durch die Kombination einer Diode D1 mit zwei Widerständen R1 und R2 sowie einem Kondensator C1 gegeben. Dabei ist die Kathode der Diode D1 unmittelbar mit der Sekundärwicklung $W_H$ des Transformators Tr und ihre Anode einmal über den Kondensator C1 und das andere Mal über die Reihenschaltung der beiden Widerstände R1 und R2 mit dem Bezugspotential (Masse) verbunden. Die Regelspannung $U_R$ für den Regelverstärker RV wird am Teilerpunkt zwischen den beiden Widerständen R1 und und R2 abgenommen. Somit besteht die Regelspannungserzeugung aus einer belasteten Einweggleichrichtung mit der Diode D1 als Gleichrichter, der während der Sperrphase (der durch den Leistungstransistor T gegebene Schalter ist geöffnet) leitend ist, mit dem Kondensator C1 als Ladekondensator und mit den beiden Widerständen R1 und R2 als Lastwiderstände. Der Regelverstärker RV ist zweckmäßig durch einen Operationsverstärker gegeben, dessen nichtinvertierender Eingang an eine erste Referenzspannung $U_{ref1}$ und dessen invertierender Eingang über einen Widerstand R4 an den Ausgang des Operationsverstärkers RV gelegt ist und außerdem über einen Widerstand R3 vom Ausgang des Regelspannungserzeugers RSE beaufschlagt ist. Der Kondensator C2, der seinerseits vom Ausgang des Regelspannungserzeugers RSE und andererseits vom Ausgang des Impulsaufbereiters IAB beaufschlagt ist, liegt am invertierenden Eingang eines weiteren Operationsverstärkers V1, der bereits einen Eingang des Pulsdauer-Modulators PDM bildet. Der Kondensator C2 wirkt als Koppelnetzwerk. Der Strom-Spannungswandler SSW wird durch den über die Primärwicklung $W_p$ fließenden Strom $J_p$ beaufschlagt und kann als direkte Stromabfrage vermittels eines Widerstands im Massezweig des Schalttransistors T oder nach dem Prinzip der $J_p$-Nachbildung arbeiten.

Der Ausgang des Impulsdauer-Modulators PDM ist durch eine geeignete logische Schaltung, insbesondere durch ein UND-Gatter G, gegeben, der - bevorzugt über eine Impulsbreitenregelungsschaltung IBR - auf die Steuerelektrode des Schalttransistors T einwirkt. Das UND-Gatter hat in dem gezeichneten Ausführungsbeispiel vier Eingänge, von denen einer - entsprechend der vorliegenden Erfindung - ausschließlich für die Beaufschlagung durch den Ausgang der Störschutzschaltung St vorgesehen ist.

Jedem der vier Eingänge des UND-Gatters G in Fig. 4 ist der Ausgang je eines Operationsverstärkers V1 - V4 zugeordnet. Der eine dieser Operationsverstärker, nämlich V1, wird an seinem invertierenden Eingang, wie bereits festgestellt, durch den Ausgang des Impulsaufbereiters IAB beaufschlagt und liegt über den Kondensator $C_2$ an dem Regelspannungserzeuger. Der nichtinvertierende Eingang dieses Operationsverstärkers V1 wird durch eine Referenzspannung $U_{ref3}$ angesteuert.

Der zweite dieser Operationsverstärker, d.h. der Operationsverstärker V2, wird an seinem nichtinvertierenden Eingang durch den Ausgang des Strom-Spannungswandlers SSW und an seinem invertierenden Eingang durch den Ausgang des Regelverstärkers RV beaufschlagt. Der dritte Operationsverstärker V3 zur Beaufschlagung des UND-Gatters G wird an seinem nichtinvertierenden Eingang durch den Ausgang des Regelverstärkers RV als auch über den Widerstand R4 und den Widerstand R3 vom Ausgang des Regelspannungserzeugers RSE beaufschlagt, während an seinem invertierenden Eingang eine weitere Referenzspannung $U_{ref2}$ angelegt ist.

Bis hierher stimmt die Schaltung gemäß Fig. 4 mit der Fig. 4 - mit Ausnahme des Sachverhalts, daß dort das UND-Gatter G nur drei Signaleingänge hat - überein. Gemäß der vorliegenden Erfindung hat nun das UND-Gatter G noch einen weiteren Eingang der durch einen zu der Störungsschutzschaltung St gehörenden vierten Operationsverstärker V4 beaufschlagt ist. Dieser ist an seinem nichtinvertierenden Eingang durch eine weitere Referenzspannung $U_{ref4}$ gesteuert und liegt mit seinem invertierenden Eingang an der Kathode einer Zenerdiode Z. Die Anode dieser Zenerdiode Z ist einerseits über einen weiteren Kondensator $C_4$ mit der Klemme für das Bezugspotential (Masse) verbunden und liegt andererseits an der Anode einer normalen PN-Diode D4, deren Kathode gemeinsam mit dem Eingang des Regelkreises RS (d.h. der Kathode der Diode D1 und der Impulsaufbereitung IAB) durch das eine Ende der sekundären Hilfswicklung $W_H$ des Transformators Tr beaufschlagt ist.

Wird nun bei der Schaltung gemäß Fig. 4 aufgrund einer Störung von $U_N$, $U_A$ oder $U_{Jp}$ der Pulsdauer-Modulator PDM so gesteuert, daß die Sekundärspannung $U_s$ ansteigt, so steigt $U_H$ im Verhältnis der Wicklungen $W_s:W_H$ ebenfalls mit an. Durch die in der Schutzschaltung St vorgesehene Diode D4 wird mit dem negativen Anteil von $U_H$ die Kapazität C4 geladen. Beim Überschreiten der durch die Zenerdiode Z vorgegebenen Vergleichsspannung wird an ihrem Ausgang eine von ihr an den Eingang des Operationsverstärkers V4 gelieferte Spannung wirksam. Da dieser aufgrund der gezeigten Anschaltung eine Schalterfunktion hat, wird die von dessen Ausgang an den zugehörigen Eingang des UND-Gatters G gelegte Beaufschlagung beendet, so daß am Ausgang des UND-Gatters G - ungeachtet des logischen Zustands an seinen übrigen Eingänge - der Pegel LOW verbleibt und deshalb auch die Impulsbreitenregelung IBR sowie der von dieser gesteuerte Schalttransistor T stillgelegt wird. Die Sperre des Gatters G bleibt solange aufrecht, bis die Ladung des Kondensators C4 wieder unter die von der Zenerdiode Z bedingte Vergleichsspannung abgesunken ist.

Wenn man noch, wie in Fig. 4 angedeutet, den an der Zenerdiode Z liegenden Eingang des Operationsverstärkers V4 mittels eines Widerstands r mit seinem Ausgang verbindet, so hat man die Wirkung einer Selbsthalteschaltung. Es ist aber auch möglich, den Operationsverstärker V4 als Schmitt-Trigger auszugestalten.

Wesentlich für die Erfindung ist also, daß bei einer Störung innerhalb der mit dem Netz verbundenen Seite des Schaltnetzteils ein Sensor erkennt, ob auf der Sekundärseite eine Spannungsüberhöhung auftritt und - wenn dies der Fall ist und nur dann - den auf der netzverbundenen Seite liegenden Schalttransistor T sperrt.

**Patentansprüche**

1. Sperrwandler-Schaltnetzteil zur Versorgung eines elektrischen Gerätes, bei dem die Primärwicklung ($W_p$) eines Transformators (Tr) in Serie mit der den Primärstrom ($I_p$) führenden Strecke eines Schalttransistors (T) an die durch Gleichrichtung der Netzwechselspannung erhaltene Gleichspannung gelegt und eine Sekundärwicklung ($W_s$) des Transformators (Tr) zur Stromversorgung des elektrischen Gerätes vorgesehen ist, die Steuerelektrode des Schalttransistors (T) durch den Ausgang einer Regelschaltung (RS) gesteuert ist und bei dem die Stromversorgung der Regelschaltung (RS) durch eine weitere Sekundärwicklung ($W_H$) des Transformators (Tr) erfolgt und die Regelschaltung (RS) einen der Regelspannungserzeugung dienenden Schaltungsteil (RSE) mit einem nachgeschalteten Regelverstärker (RV), einen der Impulsaufbereitung dienenden Schaltungsteil (IAB),

einen Strom-Spannungswandler (SSW), der als Istwert-Geber eine dem Primärstrom ($I_p$) proportionale Spannung ($U_{Ip}$) liefert, sowie

einen mit einem ersten Eingang an den Regelverstärker-Ausgang, mit einem zweiten Eingangen den Ausgang des Impulsaufbereitungs-Schaltungsteils (IAB), mit einem dritten Eingang an den Ausgang des Strom-Spannungswandlers (SSW) und mit einem Ausgang an die Steuerelektrode des Schalttransistors (T) angekoppelten Pulsdauer-Modulator (PDM),

enthält,

dadurch gekennzeichnet,

daß die Regelschaltung (RS) weiterhin eine mit ihrem Eingang an die weitere Sekundärwicklung ($W_H$) und mit ihrem Ausgang an einen vierten Eingang des Pulsdauer-Modulators (PDM) angekoppelte Störungsschutzschaltung (St) enthält, die derart ausgebildet ist, daß sie im Normalbetrieb der Regelschaltung (RS) inaktiv ist und bei Überschreiten eines vorgegebenen Grenzwertes der in der weiteren Sekundärwicklung ($W_H$) induzierten Spannung den in der Primärwicklung ($W_p$) und im Schalttransistor (T) fließenden Primärstrom ($I_p$) spontan abschaltet.

2. Schaltnetzteil nach Anspruch 1,

dadurch gekennzeichnet,

daß die Störungsschutzschaltung (St) als Komparator mit

einem Operationsverstärker (V4),

einer den invertierenden Eingang (-) des Operationsverstärkers (V4) mit der weiteren Sekundärwicklung ($W_H$) koppelnden Reihenschaltung einer Zener-Diode (Z) und einer pn-Diode (D4),

einem den Verbindungspunkt von Zener-Diode (Z) und pn-Diode (D4) mit Bezugspotential (Masse) koppelnden Kondensator (C4) und

einer Referenzspannung ($U_{ref4}$) am nichtinvertierenden Eingang (+) des Operationsverstärkers (V4)

ausgebildet ist.

3. Schaltnetzteil nach Anspruch 2,

dadurch gekennzeichnet,

daß der invertierende Eingang (-) und der Ausgang des Operationsverstärkers (V4) über einen Widerstand (r) miteinander verbunden sind.

## Claims

1. A flyback converter switch-mode power supply unit for the supply of an elecrical device, where the primary winding ($W_p$) of a transformer (Tr) in series with that path of a switching transistor (T) which conducts the primary current ($I_p$) is connected to the d.c. voltage obtained by rectification of the mains a.c. voltage, and where a secondary winding ($W_S$) of the transformer (Tr) provides the current supply for the electrical device, the control electrode of the switching transistor (T) being controlled by the output of a regulating circuit (RS), the current supply of the regulating circuit (RS) provided by a further secondary winding ($W_H$) of the transformer (Tr), and the regulating circuit (RS) containing:

a circuit component (RSE) to generate the regulating voltage fed from its output to a regulating amplifier (RV);

a circuit (IAB) which serves as a pulse preparation unit;

a current-voltage converter (SSW) which acts as an actual value generator supplying a voltage ($U_{Ip}$) proportional to the primary current ($I_p$); and

a pulse duration modulator (PDM) having a first input connected to the regulating amplifier output, a second input to the output of the pulse preparation unit (IAB), a third input to the output of the current-voltage converter (SSW), and an output connected to the control electrode of the switching transistor (T), characterised in that the regulating circuit (RS) also contains an interference protection circuit (St) whose input is coupled to the secondary winding ($W_H$) and its output to a fourth input of the pulse duration modulator (PDM), and which is designed such that it is inactive in normal operation of the regulating circuit (RS), but spontaneously disconnects the primary current ($I_p$) flowing in the primary winding ($W_p$) and in the switching transistor (T) if a predetermined limit value of the voltage induced in the further secondary winding ($W_H$) is exceeded.

2. A switch-mode power supply unit as claimed in Claim 1, characterised in that the interference protection circuit (St) is designed with a comparator comprising:

an operational amplifier (V4);

a series arrangement of a Zener diode (Z) and a pn-diode (D4) which couples the inverting input (-) of the operational amplifier (V4) to the further secondary winding ($W_H$);

a capacitor (C4) which couples the junction point of the Zener diode (Z) and pn-diode (D4) to reference potential (earth); and

a reference voltage ($U_{ref4}$) connected to the non-inverting input of the operational amplifier (V4).

3. A switch-mode power supply unit as claimed in Claim 2, characterised in that the inverting input (-) and the output of the operational amplifier (V4) are connected together via a resistor (r).

## Revendications

1. Bloc d'alimentation à convertisseur à oscillateur bloqué pour l'alimentation d'un appareil électrique, dans lequel l'enroulement primaire ($W_p$) d'un transformateur (Tr), en série avec la piste d'un transistor de communication (T) traversée par le courant primaire ($I_p$), est porté à la tension continue obtenue par redressement de la tension alternative du réseau, alors qu'un enroulement secondaire ($W_S$) du transformateur (Tr) est prévu pour l'alimentation en courant de l'appareil électrique, et que l'électrode de commande du transistor de commutation (T) est contrôlée par la sortie d'un circuit de réglage (RS), et dans lequel l'alimentation en courant du circuit de réglage (RS) a lieu à l'aide d'un deuxième enroulement secondaire ($W_H$) du transformateur (Tr), ledit circuit de réglage (RS) comportant

. une partie de circuit (RSE) à amplificateur de réglage aval (RV) et servant à produire la tension de réglage;

. une partie de circuit (IAB) servant à l'élaboration des impulsions;

. un convertisseur courant-tension (SSW) fournissant, en tant que générateur de valeur instantanée, une tension ($UI_p$) proportionnelle au courant primaire ($I_p$); ainsi

. qu'un modulateur en durée d'impulsion (PDM) relié par une première entrée à la sortie de l'amplificateur de réglage, par une seconde entrée à la sortie de la partie de circuit (IAB) qui sert à l'élaboration des impulsions, par une troisème entrée à la sortie du convertisseur courant-tension (SSW) et par une sortie à l'électrode de commande du transistor de commutation (Tr),

caractérisé par le fait

que le circuit de réglage (RS) comporte, en outre, un circuit d'antiparasitage (St) relié par son entrée au deuxième enroulement secondaire ($W_H$) et par sa sortie à une quatrième entrée du modulateur en durée d'impulsion (PDM), ledit circuit d'antiparasitage (St) étant réalisé de telle façon qu'il est inactif dans le cas du fonctionnement normal du circuit de réglage (RS), alors qu'au dépassement d'une valeur limite prédéterminée de la tension induite dans le deuxième enroulement secondaire ($W_H$), il coupe spontanément le courant primaire ($I_p$) qui passe dans l'enroulement primaire ($W_p$) et dans le transistor de commutation (T).

2. Bloc d'alimentation selon la revendication 1, caractérisé par le fait que le circuit d'antiparasitage (St) est réalisé, en tant que comparateur, avec un amplificateur opérationnel (V4), avec un circuit série constitué par une diode Zener (Z) et par une diode pn (D4), qui relie l'entrée inverseuse (-) de l'amplificateur opérationnel (V4) avec le deuxième enroulement secondaire ($W_H$), avec un condensateur (C4) qui relie, au potentiel de référence (masse), le point de liaison entre la diode Zener (Z) et la diode (D4), et avec une tension de référence ($U_{ref4}$) appliquée à l'entrée non inverseuse de l'amplificateur opérationnel (V4).

3. Bloc d'alimentation selon la revendication 2, caractérisé par le fait que l'entrée inverseuse (-) et la sortie de l'amplificateur opérationnel (V4) sont reliées entre elles par l'intermédiaire d'une résistance (r).

**FIG 1**

**FIG 2**

$U_N < 0$ heißt:
T bleibt offen

$U_N > 0$ heißt:
T wird geschlossen
(Impulsstart)

Sperrphase
T ist offen

Leitph.
T ist geschlossen

1

# FIG 3

# FIG 4